(19) Europäisches Patentamt
European Patent Office
Office européen des brevets

(11) **EP 3 289 520 B1**

(12) **EUROPÄISCHE PATENTSCHRIFT**

(45) Veröffentlichungstag und Bekanntmachung des Hinweises auf die Patenterteilung:
**10.04.2024 Patentblatt 2024/15**

(21) Anmeldenummer: **16708091.0**

(22) Anmeldetag: **17.02.2016**

(51) Internationale Patentklassifikation (IPC):
***G06V 40/20*** *(2022.01)* ***G06V 20/59*** *(2022.01)*

(52) Gemeinsame Patentklassifikation (CPC):
**G06V 40/28;** G06F 18/256; G06V 20/59

(86) Internationale Anmeldenummer:
**PCT/EP2016/053348**

(87) Internationale Veröffentlichungsnummer:
**WO 2016/173734 (03.11.2016 Gazette 2016/44)**

(54) **VERBESSERTE GESTENERKENNUNG FÜR EIN FAHRZEUG**

IMPROVED GESTURE RECOGNITION FOR A VEHICLE

RECONNAISSANCE GESTUELLE AMÉLIORÉE POUR UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.04.2015 DE 102015207768**

(43) Veröffentlichungstag der Anmeldung:
**07.03.2018 Patentblatt 2018/10**

(73) Patentinhaber: **Volkswagen Aktiengesellschaft 38440 Wolfsburg (DE)**

(72) Erfinder:
• **ETTE, Bernd**
**38442 Wolfsburg (DE)**
• **WINTSCHE, Volker**
**01099 Dresden (DE)**
• **PETRICK, Rico**
**01157 Dresden (DE)**

(56) Entgegenhaltungen:
EP-A1- 2 835 287        EP-A1- 2 848 471
US-A1- 2012 293 544     US-A1- 2014 347 321

**Beschreibung**

Die vorliegende Erfindung betrifft Verfahren und Vorrichtungen, um zur Aktivierung bestimmter Funktionen eines Fahrzeugs (z.B. zur Betätigung von Schließelementen (z.B. Türen oder Klappen) des Fahrzeugs) eine Geste zu erfassen.

Die DE 11 2013 000 590 T5 beschreibt eine dreidimensionale Objekterfassung, Nachverfolgung und Charakterisierung mittels optischer Abbildung.

Die US 8,660,300 B2 und die US 8,363,894 B2 offenbaren eine Gestenerkennung mit einem optischen System.

Die EP 2 848 471 A1 beschreibt eine Vorrichtung zur Anzeige von Informationen in einem Fahrzeug, insbesondere in einem Nutzfahrzeug, wobei bei Vorliegen definiert vorgegebener Kriterien ein mittels einer Kamera einer Gesichtserfassungseinrichtung aufgenommene Gesicht in der Art eines Spiegelbildes auf einem Bildschirm angezeigt wird.

Die US 2012/0293544 A1 beschreibt ein Bildanzeigegerät und ein Verfahren für dieses Gerät zur Auswahl eines Bildbereichs mittels Gestensteuerung.

Die US 2014/0347321 A1 beschreibt eine Vorrichtung und ein Verfahren für eine Bedienungsfläche, die auf die Bewegung eines Körpers oder eines Objekts sensitiv ist, sowie einen diese Vorrichtung integrierenden Bildschirm.

Die EP 2 835 287 A1 beschreibt eine automatische Betätigung eines Schließelements eines Fahrzeugs, wobei mit einem optischen Sensor eine Geste erfasst und zusätzlich ermittelt wird, ob sich ein Hindernis in der Bewegungsbahn des Schließelements befindet.

Nach dem Stand der Technik ist es bekannt, bestimmte Funktionen eines Fahrzeugs durch die Ausführung einer bestimmten Geste zu aktivieren. Beispielsweise existieren Fahrzeuge, bei welchen die Heckklappe durch die Ausführung einer sogenannten Kick-Geste mit dem Fuß geöffnet oder geschlossen werden kann.

Die vorliegende Erfindung stellt sich die Aufgabe, das Erfassen einer solchen Geste zur Steuerung eines Fahrzeugs zu verbessern.

Erfindungsgemäß wird diese Aufgabe durch ein Verfahren zum Erfassen einer Geste für ein Fahrzeug nach Anspruch 1 oder Anspruch 6, durch eine Vorrichtung nach Anspruch 12 oder 13 und durch ein Fahrzeug nach Anspruch 15 gelöst. Die abhängigen Ansprüche definieren bevorzugte und vorteilhafte Ausführungsformen der vorliegenden Erfindung.

Im Rahmen der vorliegenden Erfindung wird ein Verfahren zum Erfassen einer Geste zur Betätigung eines Schließelements eines Fahrzeugs bereitgestellt. Dabei umfasst das erfindungsgemäße Verfahren folgende Schritte:

- Erfassen einer Bewegung eines Objekts mit einem zweidimensionalen Sensor. Dabei wird unter einem zweidimensionalen Sensor insbesondere eine Kamera verstanden, welche (zumindest in einem zweidimensionalen Modus) keine Abstandsinformation erfasst. Dabei umfasst das Erfassen der Bewegung des Objekts mit dem zweidimensionalen Sensor ein Erfassen von Ausmaßen und/oder einer Form des Objekts.
- In Abhängigkeit von der erfassten Bewegung wird ein Abstandsmesssensor aktiviert, mit welchem insbesondere eine Abstandsinformation bezüglich des Objekts erfasst werden kann. Mit anderen Worten wird überprüft, ob die erfasste Bewegung des Objekts bestimmte Bedingungen erfüllt. Wenn dies der Fall ist, wird der Abstandsmesssensor aktiviert, um anhand des Abstandsmesssensors weitere Informationen über das Objekt bzw. die Bewegung des Objekts zu erfassen. Der Abstandsmesssensor wird dabei nur aktiviert, wenn die Ausmaße des Objekts innerhalb von vorbestimmten Schwellenwerten liegen (d.h. kleiner als ein vorbestimmter maximaler Größen-Schwellenwert und größer als ein vorbestimmter minimaler Größen-Schwellenwert sind) und/oder wenn die Form im Wesentlichen einer von mehreren vorbestimmten Musterformen entspricht.
- Erfassen der Geste mittels des aktivierten Abstandsmesssensors. Die Geste, mit welcher eine bestimmte Funktion des Fahrzeugs aktiviert werden soll, wird demnach sowohl mit Hilfe des zweidimensionalen Sensors als auch mit Hilfe des Abstandsmesssensors erfasst. Dadurch kann die Geste anhand einer dreidimensionalen Information der Bewegung des Objekts erfasst oder bestimmt werden.

Der Energieverbrauch eines Abstandsmesssensors ist in der Regel höher als der Energieverbrauch des zweidimensionalen Sensors bzw. einer (zweidimensionalen oder im zweidimensionalen Modus betriebenen) Kamera. Indem der Abstandsmesssensor nur dann aktiviert wird, wenn die vorher erfasste Bewegung des Objekts eine vorbestimmte Bedingung erfüllt, können unnötige Aktivierungen des Abstandsmesssensors vermieden, wodurch insgesamt der Energieverbrauch für das erfindungsgemäße Verfahren zum Erfassen einer Geste reduziert werden kann.

Wenn die zu erfassende Geste beispielsweise von einem Fuß oder von einer Hand einer Bedienperson (d.h. eines Menschen) auszuführen ist, wird in dem von dem zweidimensionalen Sensor erfassten Bild nach einem Objekt gesucht, welches einem Fuß oder einer Hand entsprechen kann. Nur wenn ein solches Objekt in dem Bild gefunden wird, wird der Abstandsmesssensor aktiviert, um auch mit dessen Hilfe die Geste zu erfassen.

Darüber hinaus umfasst das Erfassen der Bewegung des Objekts mit dem zweidimensionalen Sensor insbesondere auch ein Erfassen der Richtung der Bewegung. Der Abstandsmesssensor wird dabei nur aktiviert, wenn die erfasste Bewegung des Objekts an einer Stelle endet oder zu dieser Stelle gerichtet ist, welche eine vorbestimmte Lage zu dem Fahrzeug aufweist.

Wenn beispielsweise eine Tür des Fahrzeugs mit Hilfe einer Handgeste geöffnet werden soll, wird erfindungsgemäß überprüft, ob es sich bei dem erfassten Objekt um eine Hand handelt und ob sich diese Hand (oder ob sich der Besitzer der Hand) zu der entsprechenden Tür hin bewegt. Nur wenn beide Bedingungen erfüllt sind, wird der Abstandsmesssensor aktiviert, um mit seiner Hilfe die zum Öffnen der Tür erforderliche Handgeste zu erfassen. In ähnlicher Weise kann beim erfindungsgemäßen Erfassen einer Fußgeste zur Betätigung einer Heckklappe des Fahrzeugs vorgegangen werden. In diesem Fall wird erfindungsgemäß überprüft, ob es sich bei dem erfassten Objekt um einen Fuß handelt und ob sich der Fuß bzw. der Besitzer des Fußes vom Fahrzeug aus gesehen hinter die Heckklappe bewegt. Wenn diese beiden Bedingungen erfüllt sind, wird der Abstandsmesssensor aktiviert, um die zur Betätigung der Heckklappe erforderliche Fußgeste oder Standgeste zu erfassen.

Insbesondere wird bei der vorliegenden Erfindung eine dreidimensionale Kamera, welche auch als Time-of-Flight-Kamera bekannt ist, eingesetzt. Mit anderen Worten umfasst diese dreidimensionale Kamera sowohl den zweidimensionalen Sensor als auch den Abstandsmesssensor. Der vorab genannte zweidimensionale Sensor entspricht demnach der in einem zweidimensionalen Modus betriebenen dreidimensionalen Kamera. In diesem zweidimensionalen Modus ist die im Folgenden beschriebene Abstandsmessfunktion der dreidimensionalen Kamera deaktiviert. Der vorab genannte Abstandsmesssensor wird bei der dreidimensionalen Kamera durch bestimmte Pixel der dreidimensionalen Kamera realisiert, welche in der Lage sind, die Laufzeit eines von der dreidimensionalen Kamera emittierten Lichts, welches von dem Objekt reflektiert und von den bestimmten Pixeln erfasst wird, zu messen. Anhand der Laufzeit kann dann der Abstand zwischen der dreidimensionalen Kamera und dem Objekt bestimmt werden. Die Laufzeitmessung dieser bestimmten Pixel wird demnach in Abhängigkeit von der erfassten Bewegung des Objekts aktiviert.

Genauer gesagt wird ab dem Aussenden des Lichts von der Kamera eine vorbestimmte erste Zeitspanne lang die reflektierte und von dem jeweiligen Pixel erfasste Lichtmenge $Q_1$ gemessen. In ähnlicher Weise wird direkt nach dieser ersten Zeitspanne eine zweite Zeitspanne lang die reflektierte und von dem jeweiligen Pixel erfasste Lichtmenge $Q2$ gemessen. Dabei sind die erste und die zweite Zeitspanne gleich lang. Anhand der folgenden Gleichung (1) kann dann der Abstand d zu dem Bereich pro Pixel berechnet werden, von welchem das Licht reflektiert wird, welches der jeweilige Pixel erfasst.

$$d = \frac{c}{2} T_{trig} \frac{Q_2}{Q_1 + Q_2} \qquad (1)$$

Dabei entspricht c der Lichtgeschwindigkeit und $T_{trig}$ der Zeitspanne, in welcher das Licht von der Kamera ausgestrahlt wird. Die Zeitdauer von $T_{trig}$ entspricht in der Regel auch der Zeitdauer der ersten und zweiten Zeitspanne.

Bei dieser dreidimensionalen Kamera erfassen demnach zumindest bestimmte Pixel nicht nur einen Grauwert oder Farbwert, sondern messen auch einen Abstand anhand einer Laufzeit, welche das auf den jeweiligen Pixel einfallende Licht aufweist. Die Abstandsmess-Funktion der bestimmten Pixel ist dabei allerdings nur dann aktiviert, wenn die vorher anhand der Grauwerte bzw. Farbwerte der Pixel erfasste Bewegung des Objekts einer bestimmten Bedingung genügt.

Erfindungsgemäß ist es beim Einsatz der dreidimensionalen Kamera als dem Abstandmesssensor als Variante möglich, zuerst (d.h. wenn die bestimmte Bedingung erfüllt ist) nur bei einigen Pixeln (und nicht bei allen Pixeln, die diese Abstandsmessfunktion aufweisen) die Abstandsmessfunktion zu aktivieren, um die Bewegung des Objekts zusätzlich anhand einer eingeschränkten Abstandsmessinformation (weiter) zu analysieren. Erst wenn die anhand der Grauwerte bzw. Farbwerte der Pixel und zusätzlich anhand der eingeschränkten Abstandsmessinformation erfasste Bewegung des Objekts einer weiteren bestimmten Bedingung genügt, werden weitere oder alle Pixel der dreidimensionalen Kamera, die eine Abstandsmessfunktion aufweisen, aktiviert, um die Geste zu erfassen.

Bei dieser Variante können bei der ersten Aktivierung der Abstandmessfunktion bei nur einigen Pixeln beispielsweise nur bestimmte Pixelbereiche oder bestimmte Pixelgruppen der Kamera aktiviert werden, um die Bewegung des Objekts weiter zu analysieren. Der Vorteil dieser stufenweisen Aktivierung (erste Stufe nur einige Pixel; nächste Stufe weitere oder alle Pixel) der Abstandmessfunktion der Pixel liegt in einer Einsparung von Energie, da der Energieverbrauch der dreidimensionalen Kamera bei jeder Aktivierung der Abstandmessfunktion bei einem Pixel ansteigt.

Gemäß einer bevorzugten erfindungsgemäßen Ausführungsform umfasst das Erfassen der Bewegung des Objekts mit dem zweidimensionalen Sensor (z.B. anhand der Grauwerte bzw. Farbwerte der Pixel der dreidimensionalen Kamera) ein Erfassen oder Bestimmen von Reflexionseigenschaften bestimmter Bereiche des Objekts. Bei einer anschließenden Abstandsmessung mit dem aktivierten Abstandsmesssensor (z.B. dreidimensionale Kamera im dreidimensionalen Modus) können dann diese vorher ermittelten Reflexionseigenschaften berücksichtigt werden.

Durch die Berücksichtigung der Reflexionseigenschaften des Objekts können vorteilhafterweise Störungen der Abstandsmessung aufgrund dieser Reflexionseigenschaften vermieden werden. Daher beeinflussen Bereiche des Objekts, welche unterschiedliche Reflexionseigenschaften aufweisen, die Abstandsmessung nicht negativ.

Beispielsweise können Bereiche des Objekts mit unterschiedlichen Reflexionseigenschaften segmentiert werden und die Reflexionseigenschaften dieser Bereiche anhand der von dem jeweiligen Pixel erfassten Lichtstärke bestimmt werden. Dabei gilt, dass die von dem jeweiligen Pixel erfasste Lichtstärke umso größer ist, umso stärker der entsprechende Bereich Licht reflektiert (d.h. umso größer die Reflexionseigenschaft des entsprechenden Bereichs ist). Insbesondere zur Abstandsmessung werden die Pixel dann anhand der vorher bestimmten Reflexionseigenschaften kalibriert, indem beispielsweise die Empfindlichkeit der Pixel angepasst wird. Je größer die Reflexionseigenschaften desjenigen Bereichs sind, dessen Licht der jeweilige Pixel erfasst, desto geringer wird beispielsweise seine Empfindlichkeit eingestellt.

Durch die Berücksichtigung der Reflexionseigenschaften kann der Abstand auch dann korrekt bestimmt werden, wenn das zu verfolgende Objekt z.B. ein Schuh mit einem Schnürsenkel, mit gegerbtem Leder oder mit Ornamenten ist oder wenn ein Bein zu verfolgen ist, welches von einem Hosenkleid oder Rock abgedeckt ist, welcher unterschiedliche Reflexionseigenschaften aufweist.

Im Rahmen der vorliegenden Erfindung wird auch ein weiteres Verfahren zum Erfassen einer Geste für ein Fahrzeug bereitgestellt. Dieses weitere Verfahren umfasst folgende Schritte:

- Erfassen eines Zustands einer Umgebung des Fahrzeugs, in welchem ein Sensor des Fahrzeugs im Wesentlichen nur die Fahrbahn sieht bzw. erfasst, auf welcher sich das Fahrzeug befindet.
- Kalibrieren des Sensors, während dieser Zustand der Umgebung vorliegt. Bei Einsatz einer Kamera muss quasi jeder Pixel beim Vorliegen dieses Zustands im Wesentlichen dasselbe erfassen, wenn vorausgesetzt wird, dass die Fahrbahn einen gleichmäßigen Farbton aufweist.
- Erfassen der Geste mit dem kalibrierten Sensor,
- wobei das Erfassen der Geste die Schritte des wie vorstehend beschriebenen erfindungsgemäßen Verfahrens zum Erfassen einer Geste zur Betätigung eines Schließelements eines Fahrzeugs aufweist.

Vorteilhafterweise werden demnach ständig entsprechende Umgebungszustände gesucht, in welchen der Sensor kalibriert werden kann (und dann auch wird). Dadurch ist vorteilhafterweise sichergestellt, dass das Erfassen der Geste jeweils mit einem frisch kalibrierten Sensor durchgeführt wird.

Der Zustand der Umgebung, in welchem der Sensor im Wesentlichen nur die Fahrbahn erfasst, liegt beispielsweise dann vor, wenn das Fahrzeug mit einer Geschwindigkeit fährt, welche größer als ein vorbestimmter Geschwindigkeits-Schwellenwert ist. Wenn das Fahrzeug fährt, ist in aller Regel oder zumindest im Mittel davon auszugehen, dass sich in unmittelbarer Umgebung des Fahrzeugs kein Objekt befindet. Darüber hinaus liegt der besagte Zustand der Umgebung dann vor, wenn das Fahrzeug vorwärts eingeparkt wird und sich der Sensor an einer Rückseite des Fahrzeugs befindet, um beispielsweise eine Geste zur Betätigung einer Heckklappe zu erfassen.

Wenn vorausgesetzt wird, dass die Einbauhöhe des Sensors (d.h. die Höhe, in welcher der Sensor an dem Fahrzeug befestigt ist) bekannt ist, kann der Sensor derart kalibriert werden, dass der Sensor nach der Kalibrierung einen Abstand zu der Fahrbahn misst, welcher in Abhängigkeit von der Einbauhöhe und gegebenenfalls von weiteren festliegenden Eigenschaften (z.B. dem Neigungswinkel, in welchem der Sensor zu einer senkrecht zur Fahrbahn stehenden Geraden geneigt ist) festliegt.

Anders ausgedrückt steht bei Vorliegen des vorab beschriebenen Zustands der Umgebung bei Einsatz eines Abstandsmesssensors zur Gestenerkennung fest, welchen Abstand der Sensor zu erfassen hat. Daher kann die Kalibrierung des Abstandsmesssensors (z.B. der Abstandsmesseigenschaften der Pixel einer dreidimensionalen Kamera) in diesem Umgebungszustand sehr einfach und effektiv durchgeführt werden.

Beim erfindungsgemäßen Kalibrieren können auch eine oder mehrere Einflussgrößen, welche den Sensor beeinflussen, gemessen werden. Dann kann ein Differenzwert bestimmt werden, welcher sich aus der Differenz von einem von dem Sensor direkt vor der Kalibrierung gemessenen Wert (z.B. Abstand oder Grauwert bzw. Farbwert) beim Erfassen der Fahrbahn und einem durch die Kalibrierung zu erreichenden Sollwert ergibt. Wenn dann beispielsweise beim Erfassen der Umgebung ein Wert der Einflussgröße(n) gemessen wird, kann der jeweils von dem Sensor gemessene Messwert um einen Differenzwert korrigiert werden, welcher anhand des Werts der Einflussgröße(n) bestimmt wird.

Als Einflussgröße kann beispielsweise die Umgebungstemperatur und/oder der aktuelle Spannungswert einer Spannungsversorgung des Fahrzeugs berücksichtigt werden. Dazu kann der Sensor zusätzlich in der Lage sein, die Temperatur zu messen.

In der Regel werden Abstandsmessungen von bestimmten Einflussgrößen (z.B. der Temperatur) beeinflusst. Indem nun erfindungsgemäß der Einfluss der Einflussgrößen bei der Kalibrierung jeweils bestimmt und abgespeichert wird, kann dieser Einfluss der Einflussgrößen dann bei der tatsächlichen Messung vorteilhafterweise berücksichtigt werden, um dadurch den Einfluss der Einflussgrößen zu eliminieren.

Als weitere Möglichkeit kann die Kalibrierung des Sensors eine so genannte "Flat Field"-Korrektur umfassen.

Wenn der Umgebungs-Zustand erfasst wird, in dem der Sensor (z.B. eine dreidimensionale Kamera) im Wesentlichen nur die Fahrbahn erfasst, dann sollte jeder Pixel zumindest im Mittel dieselben Messwerte erfassen. Wenn dies nicht der Fall ist, werden die Pixel entsprechend kalibriert, so dass die Pixel nach der Kalibrierung bzw. "Flat Field"-Korrektur dieselben Messwerte erfassen. Darüber hinaus kann ein oder können mehrere digitale Filter eingesetzt werden, um störende Effekte auszublenden.

Bei dem zu kalibrierenden Sensor kann es sich beispielsweise um die bereits vorab beschriebene dreidimensionale Kamera handeln, welche auch als Time-of-Flight-Kamera bezeichnet wird. Vorteilhafterweise wird zur Abstandsmessung Infrarotlicht eingesetzt, so dass der Abstandsmesssensor (insbesondere die Time-of-Flight-Kamera) Infrarotlicht emittiert und anhand des reflektierten Infrarotlichts den Abstand bestimmt.

Im Rahmen der vorliegenden Erfindung wird auch eine Vorrichtung zum Erfassen einer Geste zur Betätigung eines Schließelements eines Fahrzeugs bereitgestellt. Dabei umfasst die erfindungsgemäße Vorrichtung Steuermittel, einen zweidimensionalen Sensor und einen Abstandsmesssensor. Die Steuermittel sind ausgestaltet, um mit Hilfe des zweidimensionalen Sensors eine Bewegung eines Objekts zu erfassen, um abhängig von der erfassten Bewegung den Abstandsmesssensor zu aktivieren und mittels des Abstandsmesssensors die Geste zu erfassen. Die Vorrichtung ist ferner zur Durchführung eines der vorstehend beschriebenen Verfahren ausgestaltet.

Die Vorteile der erfindungsgemäßen Vorrichtung entsprechen im Wesentlichen den Vorteilen des erfindungsgemäßen Verfahrens, welche vorab im Detail ausgeführt sind, so dass hier auf eine Wiederholung verzichtet wird.

Im Rahmen der vorliegenden Erfindung wird auch eine weitere Vorrichtung zum Erfassen einer Geste für ein Fahrzeug bereitgestellt. Die weitere Vorrichtung umfasst Steuermittel und einen Sensor. Die Steuermittel sind ausgestaltet, um einen Zustand einer Umgebung des Fahrzeugs zu erfassen, in welchem der Sensor im Wesentlichen nur eine Fahrbahn erfasst, auf welcher sich das Fahrzeug befindet. Die Vorrichtung ist ausgestaltet, um den Sensor während des Zustands zu kalibrieren mit dem kalibrierten Sensor die Geste zu erfassen. Die Vorrichtung ist ferner zur Durchführung eines der vorstehend beschriebenen Verfahren ausgestaltet.

Die Vorteile der weiteren erfindungsgemäßen Vorrichtung entsprechen im Wesentlichen den Vorteilen des weiteren erfindungsgemäßen Verfahrens, welche vorab im Detail ausgeführt sind, so dass hier auf eine Wiederholung verzichtet wird.

Schließlich wird im Rahmen der vorliegenden Erfindung ein Fahrzeug bereitgestellt, welches eine erfindungsgemäße Vorrichtung und/oder eine weitere erfindungsgemäße Vorrichtung umfasst.

Die vorliegende Erfindung ist insbesondere zum Einsatz bei Kraftfahrzeugen geeignet, um beispielsweise ein Schließelement (z.B. Tür, Kofferraumdeckel, (Heck)Klappe, Fenster) des Kraftfahrzeugs zu betätigen (z.B. zu öffnen oder zu schließen). Selbstverständlich ist die vorliegende Erfindung nicht auf diesen bevorzugten Anwendungsbereich eingeschränkt, da die vorliegende Erfindung beispielsweise auch bei Schiffen oder Flugzeugen sowie gleisgebundenen oder spurgeführten Fahrzeugen einsetzbar ist. Darüber hinaus ist der Einsatz der vorliegenden Erfindung auch bei stationären Objekten, z.B. Gebäuden, zur Betätigung von Schließelementen möglich.

Im Folgenden wird die vorliegende Erfindung anhand bevorzugter Ausführungsformen mit Bezug zu den Figuren im Detail beschrieben.

In Fig. 1 sind Messwerte eines zweidimensionalen Sensors im nicht kalibrierten Zustand dargestellt.

In Fig. 2 sind Messwerte des in Fig. 1 verwendeten zweidimensionalen Sensors im kalibrierten Zustand dargestellt.

In Fig. 3 sind Messwerte eines dreidimensionalen Sensors im nicht kalibrierten Zustand dargestellt.

In Fig. 4 sind Messwerte des in Fig. 3 verwendeten dreidimensionalen Sensors im kalibrierten Zustand dargestellt.

In Fig. 5 ist der Flussplan eines erfindungsgemäßen Verfahrens dargestellt.

Fig. 6 zeigt schematisch ein erfindungsgemäßes Fahrzeug mit einer erfindungsgemäßen Vorrichtung.

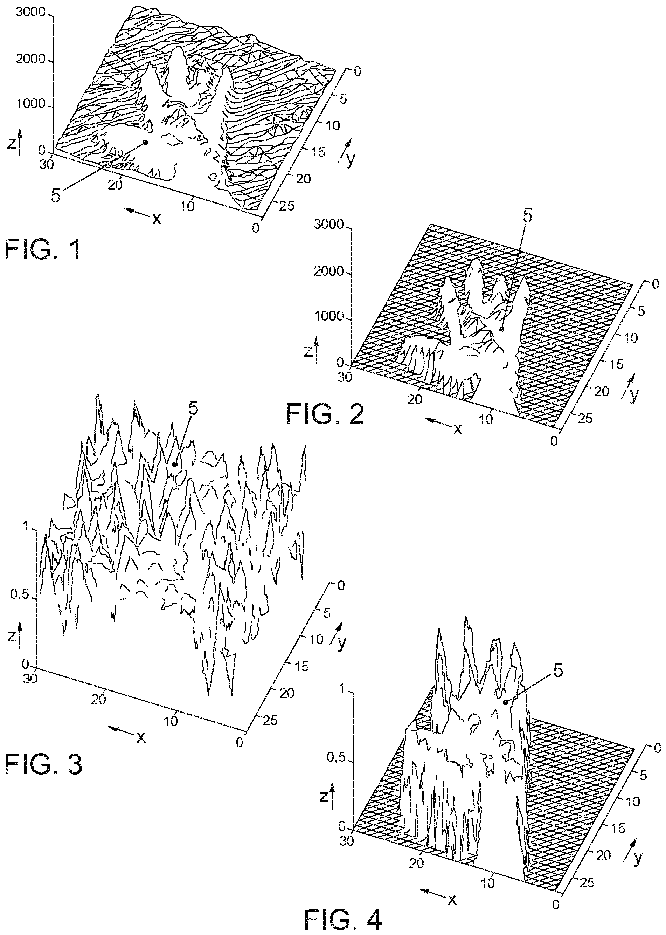

In Fig. 1 sind Messergebnisse eines zweidimensionalen Sensors, welcher nicht kalibriert ist, dargestellt. Der verwendete zweidimensionale Sensor umfasst $30 \times 30$ Pixel, für welche in Fig. 1 jeweils die pro Pixel erfasste Lichtstärke entlang der z-Achse dargestellt ist. Bei dem zweidimensionalen Sensor handelt es sich um eine dreidimensionale Kamera, welche auch als Time-of-Flight-Kamera bezeichnet wird und bei welcher die Abstandsmess-Funktion der Pixel deaktiviert ist (d.h. die Kamera wird im zweidimensionalen Modus betrieben).

In Fig. 2 sind Messergebnisse des auch bei der Fig. 1 eingesetzten Sensors, welcher in diesem Fall kalibriert ist, dargestellt. Sowohl Fig. 1 also Fig. 2 stellen Messergebnisse derselben Szene dar, wobei jeweils eine Hand 5 vor einer grauen Matte von dem Sensor erfasst wird. Man erkennt in Fig. 2, dass insbesondere der Hintergrund (die graue Matte) wesentlich gleichmäßiger erscheint, wodurch die Segmentierung des Objekts bzw. der Hand 5 erleichtert wird. Mit einem derart kalibrierten Sensor kann ein Objekt und eine Bewegung des Objekts wesentlich genauer verfolgt werden.

In Fig. 3 sind Messergebnisse der dreidimensionalen Kamera, welche nicht kalibriert ist, für dieselbe Szene wie in Figuren 1 und 2 dargestellt. In diesem Fall wird auf der z-Achse der von jedem Pixel der dreidimensionalen Kamera erfasste Abstand dargestellt.

In Fig. 4 sind Messergebnisse der auch bei der Fig. 3 eingesetzten dreidimensionalen Kamera dargestellt.

Ähnlich wie bei Figuren 1 und 2 beziehen sich die Messergebnisse der Figuren 3 und 4 auf dieselbe Szene, wobei jeweils eine Hand 5 vor einer grauen Matte von der Kamera erfasst wird. Auch in diesem Fall sind die Messwerte bzw. Abstandswerte für die Pixel der Kamera, welche die graue Matte wiedergeben, im kalibrierten Fall (Fig. 4) wesentlich gleichmäßiger als im unkalibrierten Fall (Fig. 3). Dadurch kann das Objekt (die Hand 5) wesentlich besser segmentiert oder erfasst werden, so dass auch eine Bewegung der Hand 5, insbesondere in einer Richtung zu der dreidimensionalen Kamera hin oder von der dreidimensionalen Kamera weg, wesentlich genauer verfolgt werden kann als im unkalibrierten Fall (Fig. 3).

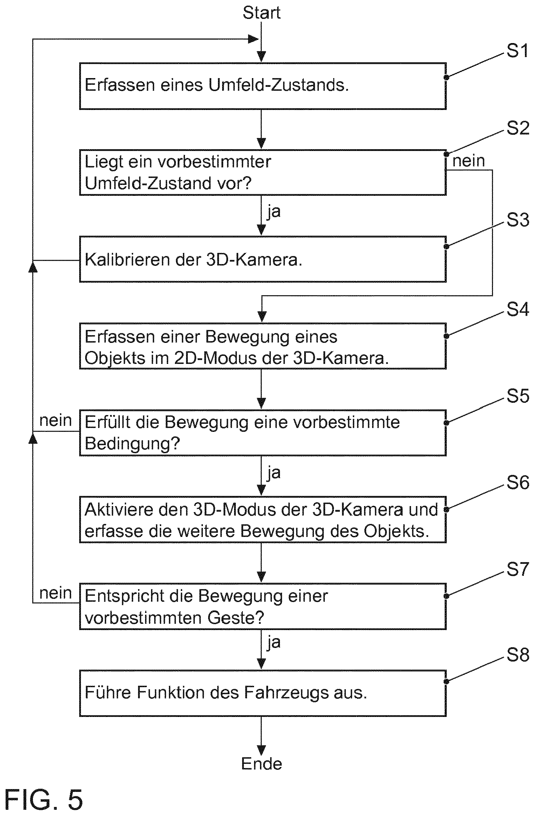

In Fig. 5 ist der Flussplan eines erfindungsgemäßen Verfahrens dargestellt.

Im Schritt S1 wird ein Umfeld-Zustand (d.h. ein Zustand, in welchem sich eine Umgebung des Fahrzeugs an der aktuellen Position des Fahrzeugs darstellt) erfasst. Wenn dieser im Schritt S1 erfasste Umfeld-Zustand einem vorbestimmten Umfeld-Zustand entspricht, was im Schritt S2 überprüft wird, wird die dreidimensionale Kamera im Schritt S3 kalibriert. Dabei liegt der vorbestimmte Umfeld-Zustand beispielsweise dann vor, wenn das Fahrzeug fährt, da man in diesem Fall davon ausgehen kann, dass die dreidimensionale Kamera (insbesondere wenn sie am Heck des Fahrzeugs angeordnet ist) im Wesentlichen nur die Fahrbahn, auf welcher das Fahrzeug aktuell fährt, erfasst. Daher kann die Kamera in diesem Fall sehr gut kalibriert werden, da bei Kenntnis der Einbauhöhe und des Neigungswinkels der Kamera der Abstand zur Fahrbahn bekannt ist.

Wenn im Schritt S2 erkannt wird, dass der vorbestimmte Umfeld-Zustand nicht vorliegt, wird zum Schritt S4 verzweigt, in welchem die dreidimensionale Kamera im zweidimensionalen Modus arbeitet. In diesem zweidimensionalen Modus erfassen die Pixel der Kamera nur einen Grauwert bzw. Farbwert, aber keine Abstandsinformation (d.h. die Laufzeitmessung ist deaktiviert). Im folgenden Schritt S5 wird überprüft, ob im Schritt S4 ein Objekt erfasst wurde, welches bestimmten Bedingungen genügt. Beispielsweise können diese Bedingungen erfüllt sein, wenn anhand der Ausmaße und der Formen eines erfassten Objekts erkannt wird, dass es sich bei diesem Objekt um einen Menschen oder um ein bestimmtes Körperteil (z.B. Fuß oder Hand) eines Menschen handelt. Wenn das erfasste Objekt diesen vorbestimmten Bedingungen genügt, wird zusätzlich überprüft, ob die Bewegung des erfassten Objekts ebenfalls bestimmten Bedingungen genügt. Diese Bedingungen sind beispielsweise dann erfüllt, wenn sich das Objekt in einer vorbestimmten Geschwindigkeit (d.h. die Geschwindigkeit des Objekts muss oberhalb eines minimalen Geschwindigkeits-Schwellenwerts und unterhalb eines maximalen Geschwindigkeits-Schwellenwerts liegen) zu einer vorbestimmten Stelle vor die dreidimensionale Kamera bewegt.

Wenn die vom Schritt S5 überprüften Bedingungen erfüllt sind, wird im folgenden Schritt S6 der dreidimensionale Modus der Kamera aktiviert und die weitere Bewegung des Objekts mit der Kamera erfasst. In diesem dreidimensionalen Modus wird pro Pixel der Kamera nicht nur der Grauwert bzw. Farbwert, sondern zusätzlich anhand einer Laufzeitmessung der Abstand zu demjenigen Bereich gemessen, dessen Licht der jeweilige Pixel empfängt. Dadurch wird anhand der im dreidimensionalen Modus betriebenen Kamera eine dreidimensionale Information über das Objekt und eine Bewegung des Objekts erfasst. Im Schritt S7 wird überprüft, ob die mit der im dreidimensionalen Modus arbeitenden Kamera erfasste Bewegung des Objekts einer vorbestimmten Geste entspricht. Wenn dies der Fall ist, wird im Schritt S8 eine bestimmte Funktion des Fahrzeugs (z.B. ein Öffnen oder Schließen einer Heckklappe des Fahrzeugs) ausgeführt.

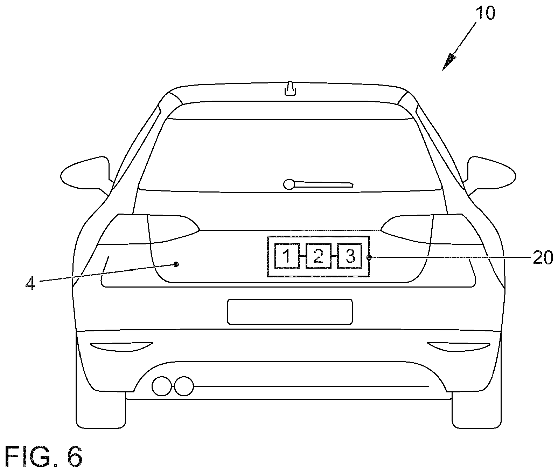

In Fig. 6 ist schematisch ein erfindungsgemäßes Fahrzeug 10 dargestellt, welches eine erfindungsgemäße Vorrichtung 20 umfasst. Dabei umfasst die erfindungsgemäße Vorrichtung 20 selbst neben der dreidimensionalen Kamera 1 eine Steuerung 2 und einen Speicher 3. In dem Speicher 3 sind insbesondere vorbestimmte Gesten oder vorbestimmte Formen von zu verfolgenden Objekten abgelegt. Die erfindungsgemäße Vorrichtung 20 ist ausgestaltet, um eine bestimmte Geste im Heckbereich des Fahrzeugs 10 zu erfassen, um abhängig davon eine Heckklappe 4 des Fahrzeugs 10 zu betätigen.

**Bezugszeichenliste**

| | |
|---|---|
| 1 | 3D-Kamera |
| 2 | Steuerung |
| 3 | Speicher |
| 4 | Heckklappe |
| 5 | Objekt bzw. Hand |
| 10 | Fahrzeug |
| 20 | Vorrichtung |
| S1-S8 | Verfahrensschritt |

**Patentansprüche**

1.  Verfahren zum Erfassen einer Geste zur Betätigung eines Schließelements eines Fahrzeugs (10), umfassend:

    Erfassen einer Bewegung eines Objekts (5) mit einem zweidimensionalen Sensor (1) umfassend ein Erfassen von Ausmaßen und/oder einer Form des Objekts (5),
    Aktivieren eines Abstandmesssensors (1) abhängig von der erfassten Bewegung und,
    wenn die Ausmaße kleiner als ein vorbestimmter maximaler Größen-Schwellenwert und größer als ein vorbestimmter minimaler Größen-Schwellenwert sind und/oder wenn die Form einer von vorbestimmten Musterformen entspricht, und
    Erfassen der Geste mit Hilfe des aktivierten Abstandmesssensors (1).

2.  Verfahren nach Anspruch 1,
    **dadurch gekennzeichnet,**

    **dass** das Erfassen der Bewegung des Objekts (5) mit dem zweidimensionalen Sensor (1) ein Erfassen einer Richtung der Bewegung umfasst, und
    **dass** der Abstandsmesssensor (1) nur aktiviert wird, wenn die Bewegung des Objekts (5) an einer Stelle endet, welche eine vorbestimmte Lage zu dem Fahrzeug (10) aufweist.

3.  Verfahren nach einem der vorhergehenden Ansprüche,
    **dadurch gekennzeichnet,**

    **dass** der zweidimensionale Sensor und der Abstandmesssensor durch dieselbe dreidimensionale Kamera (1) ausgebildet werden, und
    **dass** der Abstandmesssensor durch eine Laufzeitmessung bestimmter Pixel der dreidimensionalen Kamera (1) ausgebildet wird, so dass die Laufzeitmessung abhängig von der erfassten Bewegung aktiviert wird.

4.  Verfahren nach einem der vorhergehenden Ansprüche, **dadurch gekennzeichnet,**

    **dass** das Erfassen der Bewegung des Objekts (5) ein Erfassen von Reflektionseigenschaften von Bereichen des Objekts umfasst, und
    **dass** der Abstandmesssensor (1) einen Abstand zu dem Objekt (5) abhängig von den Reflektionseigenschaften bestimmt.

5.  Verfahren zum Erfassen einer Geste für ein Fahrzeug (10), umfassend:

    Erfassen eines Zustands einer Umgebung des Fahrzeugs (10), in welchem ein Sensor (1) des Fahrzeugs (10) nur eine Fahrbahn, auf welcher sich das Fahrzeug (10) befindet, erfasst,
    Kalibrieren des Sensors (1) während des Zustands, und
    Erfassen der Geste mit dem kalibrierten Sensor (1),
    wobei das Erfassen der Geste die Schritte des Verfahrens nach einem der Ansprüche 1 bis 4 aufweist.

6.  Verfahren nach Anspruch 5,
    **dadurch gekennzeichnet,**
    **dass** der Zustand der Umgebung erfasst wird, wenn das Fahrzeug (10) mit einer Geschwindigkeit fährt, welche oberhalb eines Geschwindigkeits-Schwellenwerts liegt, oder wenn das Fahrzeug durch eine Vorwärtsfahrt einparkt und der Sensor (1) an einer Rückseite des Fahrzeugs (10) angeordnet ist.

7.  Verfahren nach Anspruch 5 oder 6, **dadurch gekennzeichnet,**

    **dass** der Sensor (1) in einer vorbestimmten Einbauhöhe an dem Fahrzeug (10) befestigt ist,
    **dass** das Kalibrieren des Sensors (1) während des Zustands umfasst, dass der Sensor (1) derart kalibriert wird, dass der Sensor (1) nach der Kalibrierung in dem Zustand einen Abstand zu der Fahrbahn misst, welcher der Einbauhöhe entspricht.

8.  Verfahren nach einem der Ansprüche 5 bis 7,
    **dadurch gekennzeichnet,**

**dass** das Kalibrieren ein Messen mindestens einer Einflussgröße, welche das Erfassen des Sensors (1) beeinflusst, und ein Bestimmen eines Differenzwerts, um welchen ein von dem Sensor (1) gemessener Wert beim Erfassen der Fahrbahn von einem nach der Kalibrierung gemessenen Wert beim Erfassen der Fahrbahn abweicht, umfasst, und

**dass** bei einem Erfassen der Umgebung mittels des Sensors (1) ein Wert der mindestens einen Einflussgröße gemessen wird, um einen von dem Sensor (1) gemessenen Messwert abhängig von dem Wert und einem diesem Wert entsprechenden Differenzwert zu korrigieren.

9. Verfahren nach Anspruch 8,
**dadurch gekennzeichnet,**
**dass** die mindestens eine Einflussgröße eine Temperatur und/oder eine Spannung einer Spannungsversorgung des Fahrzeugs (10) umfasst.

10. Vorrichtung zum Erfassen einer Geste zur Betätigung eines Schließelements eines Fahrzeugs (10),

wobei die Vorrichtung (20) Steuermittel (2), einen zweidimensionalen Sensor (1) und einen Abstandmesssensor (1) umfasst,
wobei die Steuermittel (2) ausgestaltet sind, um mittels des zweidimensionalen Sensors (1) eine Bewegung eines Objekts (5) zu erfassen, um abhängig von der erfassten Bewegung den Abstandmesssensor zu aktivieren und um mittels des aktivierten Abstandmesssensors (1) die Geste zu erfassen, und
wobei die Vorrichtung zur Durchführung des Verfahrens nach einem der Ansprüche 1-9 ausgestaltet ist.

11. Vorrichtung zum Erfassen einer Geste für ein Fahrzeug (10),

wobei die Vorrichtung (20) Steuermittel (2) und einen Sensor (1) umfasst,
wobei die Steuermittel (2) ausgestaltet sind, um einen Zustand einer Umgebung des Fahrzeugs (10) zu erfassen, in welchem der Sensor (1) nur eine Fahrbahn, auf welcher sich das Fahrzeug (10) befindet, erfasst,
wobei die Vorrichtung (20) ausgestaltet ist, um den Sensor (1) während des Zustands zu kalibrieren und mit dem kalibrierten Sensor (1) die Geste zu erfassen, und
wobei die Vorrichtung zur Durchführung des Verfahrens nach einem der Ansprüche 1-9 ausgestaltet ist.

12. Fahrzeug mit einer Vorrichtung (20) nach einem der Ansprüche 10-12.

**Claims**

1. Method for detecting a gesture for actuating a closing element of a vehicle (10), comprising:

detecting a movement of an object (5) using a two-dimensional sensor (1), which detecting comprises detecting dimensions and/or a shape of the object (5),
activating a distance measuring sensor (1) depending on the detected movement and, if the dimensions are smaller than a predetermined maximum variable threshold value and greater than a predetermined minimum variable threshold value and/or if the shape corresponds to one of predetermined pattern shapes, and
detecting the gesture using the activated distance measuring sensor (1).

2. Method according to claim 1,
**characterized in that**

detecting the movement of the object (5) using the two-dimensional sensor (1) comprises detecting a direction of the movement, and
**in that** the distance measuring sensor (1) is only activated when the movement of the object (5) ends at a point which has a predetermined position relative to the vehicle (10).

3. Method according to either of the preceding claims,
**characterized in that**

the two-dimensional sensor and the distance measuring sensor are formed by the same three-dimensional camera (1), and

**in that** the distance measuring sensor is formed by a runtime measurement of certain pixels of the three-dimensional camera (1), so that the runtime measurement is activated depending on the detected movement.

4. Method according to any of the preceding claims,
   **characterized in that**

   detecting the movement of the object (5) comprises detecting reflection properties of regions of the object, and
   **in that** the distance measuring sensor (1) determines a distance from the object (5) depending on the reflection properties.

5. Method for detecting a gesture for a vehicle (10), comprising:

   detecting a state of the surroundings of the vehicle (10) in which a sensor (1) of the vehicle (10) only detects a roadway on which the vehicle (10) is located,
   calibrating the sensor (1) during the state, and
   detecting the gesture using the calibrated sensor (1),
   wherein the detection of the gesture has the steps of the method according to any of claims 1 to 4.

6. Method according to claim 5,
   **characterized in that**
   the state of the surroundings is detected when the vehicle (10) drives at a speed which is above a speed threshold value, or when the vehicle is parked by forward driving and the sensor (1) is arranged on a rear side of the vehicle (10).

7. Method according to either claim 5 or claim 6,
   **characterized in that**

   the sensor (1) is fastened to the vehicle (10) at a predetermined installation height,
   **in that** calibrating the sensor (1) during the state comprises calibrating the sensor (1) such that, after calibration in the state, the sensor (1) measures a distance from the roadway, which distance corresponds to the installation height.

8. Method according to any of claims 5 to 7,
   **characterized in that**

   calibrating comprises measuring at least one influencing variable which influences the detection of the sensor (1), and determining a difference value by which a value measured by the sensor (1) when detecting the roadway deviates from a value measured after calibration when detecting the roadway, and
   **in that** when detecting the surroundings by means of the sensor (1), a value of the at least one influencing variable is measured in order to correct a measured value measured by the sensor (1) depending on the value and a difference value corresponding to this value.

9. Method according to claim 8,
   **characterized in that**
   the at least one influencing variable comprises a temperature and/or a voltage of a voltage supply of the vehicle (10).

10. Device for detecting a gesture for actuating a closing element of a vehicle (10),

    wherein the device (20) comprises control means (2), a two-dimensional sensor (1), and a distance measuring sensor (1),
    wherein the control means (2) are designed to detect a movement of an object (5) by means of the two-dimensional sensor (1) in order to activate the distance measuring sensor depending on the detected movement and to detect the gesture by means of the activated distance measuring sensor (1), and
    wherein the device is designed to implement the method according to any of claims 1-9.

11. Device for detecting a gesture for a vehicle (10),

    wherein the device (20) comprises control means (2) and a sensor (1),
    wherein the control means (2) are designed to detect a state of the surroundings of the vehicle (10) in which the sensor (1) only detects a roadway on which the vehicle (10) is located,
wherein the device (20) is designed to calibrate the sensor (1) during the state and to detect the gesture using the calibrated sensor (1), and
wherein the device is designed to implement the method according to any of claims 1-9.

**12.** Vehicle having a device (20) according to any of claims 10-12.


**Revendications**

**1.** Procédé permettant la détection d'un geste pour l'actionnement d'un élément de fermeture d'un véhicule (10), comprenant :

la détection d'un mouvement d'un objet (5) avec un capteur bidimensionnel (1) comprenant une détection de dimensions et/ou d'une forme de l'objet (5),
l'activation d'un capteur de mesure de distance (1) en fonction du mouvement détecté et, si les dimensions sont inférieures à une valeur seuil de taille maximale prédéterminée et supérieures à une valeur seuil de taille minimale prédéterminée et/ou si la forme correspond à une forme modèle parmi des formes modèles prédéterminées, et
la détection du geste à l'aide du capteur de mesure de distance (1) activé.

**2.** Procédé selon la revendication 1,
**caractérisé en ce**

**que** la détection du mouvement de l'objet (5) avec le capteur bidimensionnel (1) comprend une détection d'une direction du mouvement, et
**que** le capteur de mesure de distance (1) n'est activé que si le mouvement de l'objet (5) se termine à un endroit qui présente une position prédéterminée par rapport au véhicule (10).

**3.** Procédé selon l'une des revendications précédentes, **caractérisé en ce**

**que** le capteur bidimensionnel et le capteur de mesure de distance sont formés par la même caméra tridimensionnelle (1), et
**que** le capteur de mesure de distance est formé par un moyen de mesure du temps de propagation de pixels déterminés de la caméra tridimensionnelle (1), de sorte que le moyen de mesure du temps de propagation est activé en fonction du mouvement détecté.

**4.** Procédé selon l'une des revendications précédentes,
**caractérisé en ce**

**que** la détection du mouvement de l'objet (5) comprend une détection de propriétés de réflexion de zones de l'objet, et
**que** le capteur de mesure de distance (1) détermine une distance par rapport à l'objet (5) en fonction des propriétés de réflexion.

**5.** Procédé permettant la détection d'un geste pour un véhicule (10), comprenant :

la détection d'un état d'un environnement du véhicule (10) dans lequel un capteur (1) du véhicule (10) ne détecte qu'une voie de circulation sur laquelle le véhicule (10) se trouve,
l'étalonnage du capteur (1) pendant l'état, et
la détection du geste avec le capteur (1) étalonné,
dans lequel la détection du geste présente les étapes du procédé selon l'une des revendications 1 à 4.

**6.** Procédé selon la revendication 5,
**caractérisé en ce**
**que** l'état de l'environnement est détecté lorsque le véhicule (10) circule à une vitesse qui est supérieure à une valeur seuil de vitesse ou lorsque le véhicule se gare en avançant et que le capteur (1) est disposé sur un côté arrière du véhicule (10).

**7.** Procédé selon la revendication 5 ou 6,
**caractérisé en ce**

**que** le capteur (1) est fixé à une hauteur de montage prédéterminée sur le véhicule (10),
**que** l'étalonnage du capteur (1) pendant l'état comprend le fait que le capteur (1) est étalonné de telle sorte que le capteur (1) mesure, après l'étalonnage dans l'état, une distance par rapport à la voie de circulation qui correspond à la hauteur de montage.

**8.** Procédé selon l'une des revendications 5 à 7,
**caractérisé en ce**

**que** l'étalonnage comprend une mesure d'au moins une grandeur d'influence qui influence la détection du capteur (1), et une détermination d'une valeur de différence, de laquelle une valeur mesurée par le capteur (1) lors de la détection de la voie de circulation s'écarte d'une valeur mesurée après l'étalonnage lors de la détection de la voie de circulation, et
**que,** lors d'une détection de l'environnement au moyen du capteur (1), une valeur de l'au moins une grandeur d'influence est mesurée, afin de corriger une valeur de mesure mesurée par le capteur (1) en fonction de la valeur et d'une valeur de différence correspondant à ladite valeur.

**9.** Procédé selon la revendication 8,
**caractérisé en ce**
**que** l'au moins une grandeur d'influence comprend une température et/ou une tension d'une alimentation en tension du véhicule (10).

**10.** Dispositif permettant la détection d'un geste pour l'actionnement d'un élément de fermeture d'un véhicule (10),

dans lequel le dispositif (20) comprend des moyens de commande (2), un capteur bidimensionnel (1) et un capteur de mesure de distance (1),
dans lequel les moyens de commande (2) sont configurés pour détecter un mouvement d'un objet (5) au moyen du capteur bidimensionnel (1), afin d'activer le capteur de mesure de distance en fonction du mouvement détecté et de détecter le geste au moyen du capteur de mesure de distance (1) activé, et
dans lequel le dispositif est configuré pour exécuter le procédé selon l'une des revendications 1 à 9.

**11.** Dispositif permettant la détection d'un geste pour un véhicule (10),

dans lequel le dispositif (20) comprend des moyens de commande (2) et un capteur (1),
dans lequel les moyens de commande (2) sont configurés pour détecter un état d'un environnement du véhicule (10) dans lequel le capteur (1) ne détecte qu'une voie de circulation sur laquelle le véhicule (10) se trouve,
dans lequel le dispositif (20) est configuré pour étalonner le capteur (1) pendant l'état et pour détecter le geste avec le capteur (1) étalonné, et
dans lequel le dispositif est configuré pour exécuter le procédé selon l'une des revendications 1 à 9.

**12.** Véhicule comportant un dispositif (20) selon l'une des revendications 10 à 12.

FIG. 1

FIG. 2

FIG. 3

FIG. 4

Start

Erfassen eines Umfeld-Zustands. — S1

Liegt ein vorbestimmter Umfeld-Zustand vor? — S2

nein

ja

Kalibrieren der 3D-Kamera. — S3

Erfassen einer Bewegung eines Objekts im 2D-Modus der 3D-Kamera. — S4

Erfüllt die Bewegung eine vorbestimmte Bedingung? — S5

nein

ja

Aktiviere den 3D-Modus der 3D-Kamera und erfasse die weitere Bewegung des Objekts. — S6

Entspricht die Bewegung einer vorbestimmten Geste? — S7

nein

ja

Führe Funktion des Fahrzeugs aus. — S8

Ende

FIG. 5

FIG. 6

**EP 3 289 520 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 112013000590 T5
- US 8660300 B2
- US 8363894 B2
- EP 2848471 A1
- US 20120293544 A1
- US 20140347321 A1
- EP 2835287 A1